Europäisches Patentamt

European Patent Office

Office européen des brevets

(19)

(11) Publication number : **0 505 204 A2**

(12) # EUROPEAN PATENT APPLICATION

(21) Application number : **92302434.3**

(22) Date of filing : **20.03.92**

(51) Int. Cl.⁵ : **H04M 1/72**

(30) Priority : **22.03.91 JP 57537/91**

(43) Date of publication of application :
**23.09.92 Bulletin 92/39**

(84) Designated Contracting States :
**DE GB SE**

(71) Applicant : **NEC CORPORATION**
**7-1, Shiba 5-chome Minato-ku**
**Tokyo 108-01 (JP)**

(72) Inventor : **Shimura, Yukihiro, c/o NEC**
**Corporation**
**7-1, Shiba 5-chome**
**Minato-ku, Tokyo (JP)**

(74) Representative : **Orchard, Oliver John**
**JOHN ORCHARD & CO. Staple Inn Buildings**
**North High Holborn**
**London WC1V 7PZ (GB)**

(54) **Radiotelephone set.**

(57)   A base station comprises a memory for storing at least two vacant channel. When a communication request is generated, the at least two vacant channel are supplied to a mobile station. When a mobile station detects one of the at least two channel to be vacant, a communication starts between the two stations by using the detected channel.

FIG. 4

EP 0 505 204 A2

## FIELD OF THE INVENTION

This invention relates to a radiotelephone set, and more particularly to, a radiotelephone set in which communication between a base station and a mobile station is carried out by using a vacant channel selected from plural channels.

## BACKGROUND OF THE INVENTION

A conventional radiotelephone set such as a cordless telephone set includes a base station and a mobile station.

In the conventional cordless telephone set, when a call request signal is transmitted from a mobile station to a base station, a channel designation signal indicating a vacant channel selected from plural channels is transmitted from the base station to the mobile station. In accordance with the channel designation signal, the mobile station is set to use the designated channel and the designated channel is determined to be also vacant on the side of the mobile station. When the designated channel is available, communication between the base station and the mobile station starts.

However, there is a disadvantage in that the designated channel may conflict with on occupied channel of another cordless telephone set, if the mobile station is located in a communication area of the other cordless telephone set, so that the designated channel may not be available for the communication. The problem is serious especially when many cordless telephone sets are located in a limited small area.

## SUMMARY OF THE INVENTION

Accordingly, it is an object of the invention to provide a radiotelephone set in which the conflict of channels is avoided among a plurality of cordless telephone sets which are located in a limited area.

According to the invention, a radiotelephone set, including:

a first station comprising a memory for storing at least two vacant channels, and a controller for starting a communication by selecting a channel from a plurality of channels allocated for the communication; and

a second station carrying out a communication with the first station, the second station comprising a controller for selecting the channel from the plurality of channels in cooperation with the controller of the first station;

wherein the controller of the first station supplies a control signal comprising the at least two vacant channels to the second station, when a communication request is generated in either of the first or second station, and the controller of the second station selects a channel from the at least two vacant channels.

## BRIEF DESCRIPTION OF THE DRAWINGS

The invention will be explained in more detail in conjunction with appended drawings; wherein:

Fig. 1 is an explanatory view showing a conventional radiotelephone set;

Fig. 2 is a sequence chart explaining operation of the conventional radiotelephone set;

Fig. 3 is an explanatory view explaining operation of the conventional radiotelephone set;

Fig. 4 is a block diagram showing a radiotelephone set of a preferred embodiment according to the invention;

Fig. 5 is a format of a control signal used in the preferred embodiment; and

Fig. 6 is a sequence chart explaining operation of the preferred embodiment.

## DESCRIPTION OF THE PREFERRED EMBODIMENTS

Before describing a radiotelephone set according to the invention, the briefly aforementioned conventional cordless telephone set will be explained.

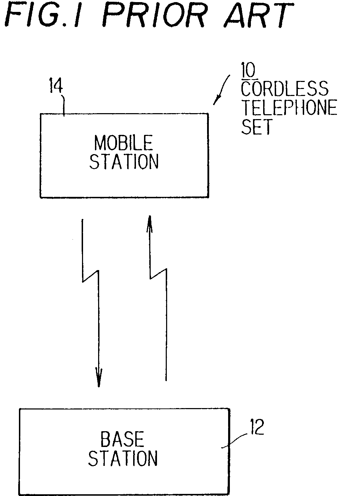

Fig. 1 shows a conventional cordless telephone set 10 composed of a base station 12 having a predetermined communication area and a mobile station 14. In the cordless telephone set 10, a radio communication is carried out between the base station 12 and the mobile stations 14 by using a vacant radio channel selected from a plurality of radio channels, for example eighty seven channels conventionally allocated in Japan.

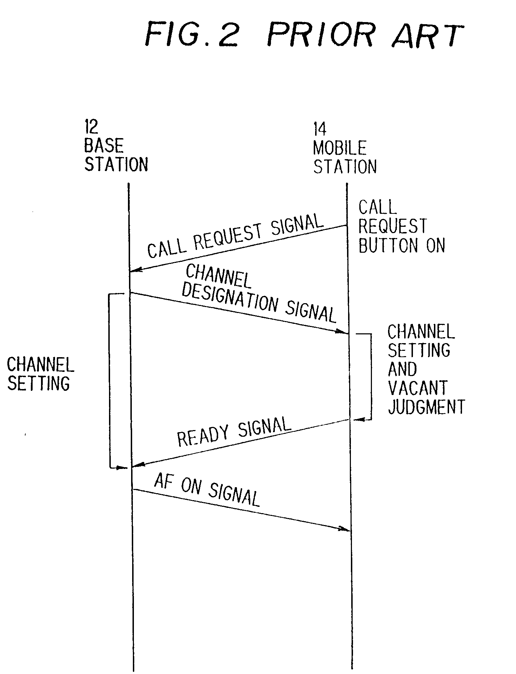

Fig. 2 shows a sequence chart of the conventional cordless telephone set 10. In the conventional cordless telephone set, when a call request button (not shown) of the mobile station 14 is pressed, a call request signal is transmitted from the mobile station 14 to the base station 12. In response to the call request signal, a channel designation signal corresponding to a vacant channel selected by the base station 12 is transmitted from there to the mobile station 14. At this time, the base station 12 and the mobile station 14 are set to use the selected (designated) channel.

Next, the designated channel is determined to be vacant or not for the communication. When the designate channel is vacant, a ready signal is transmitted to the base station 12. In response to the ready signal, an AF on signal is transmitted from the base station 12 to the mobile station 14, so that a communication starts between the base station 12 and the mobile station 14.

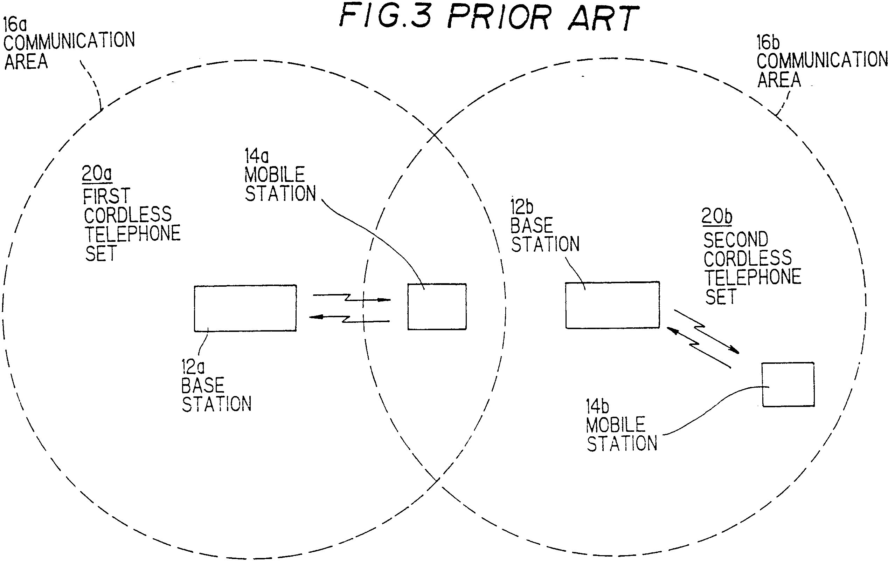

Fig. 3 shows a case that two cordless telephone sets 20a and 20b ( first and second cordless telephone sets ) are located in a predetermined area. The first and second telephone sets 20a and 20b are composed of base stations 12a and 12b having communication areas 16a and 16b and mobile stations 14a and 14b, respectively. The communication areas 16a and 16b are overlapped each other in part, and the mobile station 14a of the first cordless telephone set 20a is located in the communication area 16b of the second cordless telephone set 20b.

In this situation, according to the conventional cordless telephone set, a channel interference may occur between the first and second cordless telephone sets 20a and 20b.

In more detail, a designated channel selected at the base station 12a may conflict with a channel now used in the second cordless telephone set 20b, because the mobile station 14a of the first cordless telephone set 20a is located in the communication area of the second cordless telephone set 20b. Then, the designated channel is not available for the mobile station 14a, so that the ready signal is not supplied from the mobile station 14a to the base station 12a. As a result, a communication between the base station 12a and the mobile station 14a is impossible to start.

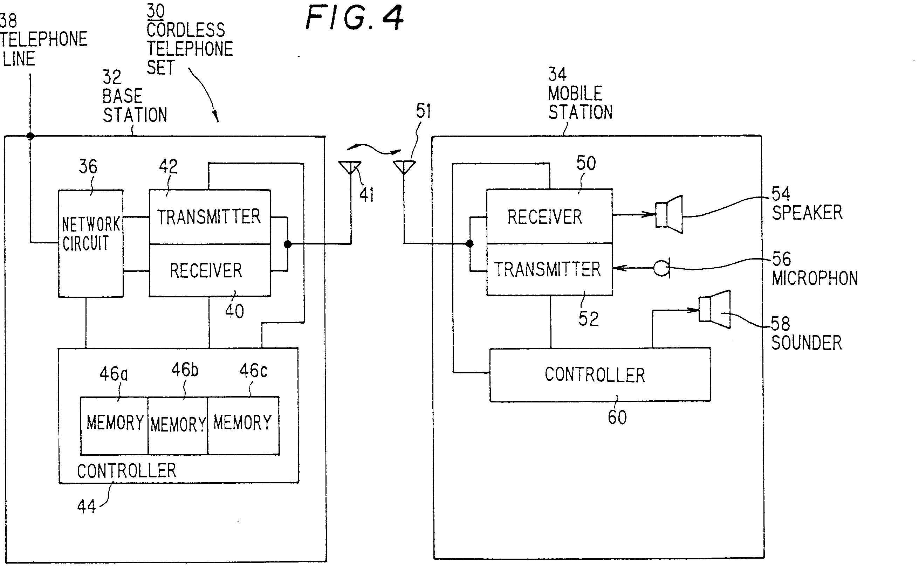

Fig. 4 shows a cordless telephone set 30 of a preferred embodiment according to the invention. The cordless telephone set 30 is composed of a base station 32 and a mobile station 34. The base station 32 includes a network circuit 36 connected to a telephone line 38 for detecting a call signal, supplying a dial data and performing two-wire to four-wire conversion, a receiver 40 for receiving a radio signal from the mobile station 34 via an antenna 41, a transmitter 42 for transmitting a radio signal to the mobile station 34 via the antenna 41, and a controller 44 connected to the network circuit 36, the receiver 40 and the transmitter 42 for controlling them. The controller 44 includes three memory regions 46a, 46b and 46c for storing three vacant channels.

The mobile station 34 includes a receiver 30 for receiving a radio signal from the base station 32 via an antenna 51, a transmitter 52 for transmitting a radio signal to the base station 32 via the antenna 51, a speaker 54 connected to the receiver 50 for converting electrical waves into sound waves, a microphone 56 connected to the transmitter 52 for receiving sound waves (voice from an operator) and converting them into electrical waves, a sounder 58 for supplying sound information indicating the receipt of a signal from the base station 32, and a controller 60 connected to the receiver 50, the transmitter 52 and the sounder 58, respectively.

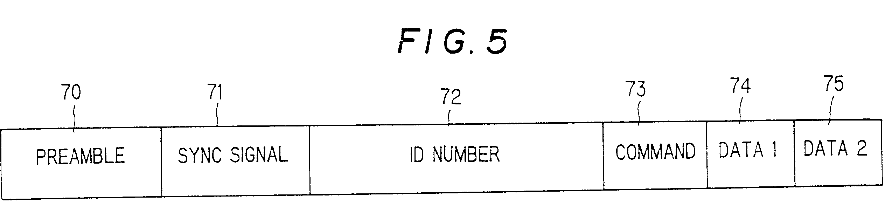

Fig. 5 shows one example of a format of a control signal transmitted between the base station 32 and the mobile station 34. The control signal is composed of a preamble data 70 of sixteen bits, a synchronize signal 71 of sixteen bits, an ID number 72 of thirty seven bits, a command data 73 of eight bits, for example, receiving command, channel designating command, sounder on command, sounder off command, call finish command, etc. and two of flexible data 74 and 75 each of eight bits storing information corresponding to the command data 73.

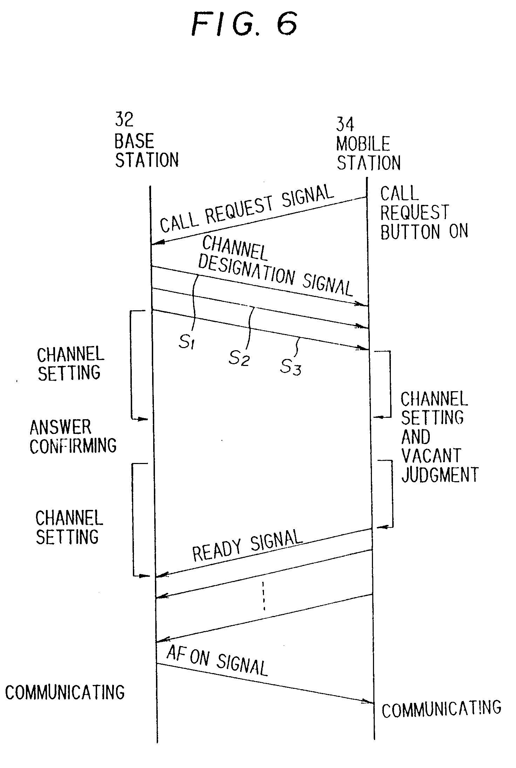

Next, operation of the preferred embodiment will be explained in conjunction with Fig. 6.

Fig. 6 shows a sequence chart of start operation of the cordless telephone set 30. In the cordless telephone set 30, when a call request button (not shown) of the mobile station 34 is pressed, a call request signal is transmitted from the mobile station 34 to the base station 32. In response to the call request signal, three of channel designation signals $S_1$, $S_2$ and $S_3$ corresponding to three vacant channels stored in the memory regions 46a, 46b and 46c are transmitted from the base station 32 to the mobile station 34.

Then, the base station 32 and mobile station 34 are set to use a first channel selected from the three designated (vacant) channels. Thus, the first channel is determined to be vacant or not for the mobile station 34, and when the first channel is available, a ready signal is transmitted to the base station 32. In response to the ready signal, an AF on signal is transmitted from the base station 32 to the mobile station 34, so that a communication starts between the base station 32 and the mobile station 34.

On the other hand, if the first channel is occupied by a cordless telephone set in a partly overlapped communication area, a ready signal is not transmitted to the base station 32. When the ready signal is not received by the base station 32 in a predetermined time, both of the base station 32 and the mobile station 34 are set to use a second channel. When the second channel is determined to be vacant on the side of the mobile station 34, the ready signal is supplied from the mobile station 34 to the base station 32, so that a communication starts therebetween.

As described above, according to the preferred embodiment, a communication between a base station 32 and a mobile station 34 is carried out by avoiding the conflict of channels, even if a plurality of cordless telephone sets are located in a limited area.

Even in a case where a call request from the base station 32 to the mobile station 34 is made, the same sequence explained above can be used.

Although the invention has been described with respect to specific embodiment for complete and clear disclosure, the appended claims are not to be thus limited but are to be construed as embodying all modification and alternative constructions that may occur to one skilled in the art which fairly fall within the basic teaching herein set forth. That is, the three vacant channel data can be included in one channel designation signal. Further, the number of the memory regions storing vacant channels, respectively, is not limited three. In addition, the number of mobile station is not limited one, that is, the cordless telephone set may have one base station and plural mobile stations. In this case, the base station supplies a control signal including a signal for identifying one of the plural mobile stations to the plural mobile stations.

**Claims**

1. A radiotelephone set, comprising:
   a first station comprising a memory for storing at least two vacant channels, and a controller for starting a communication by selecting a channel from a plurality of channels allocated for said communication; and
   a second station carrying out a communication with said first station, said second station comprising a controller for selecting said channel from said plurality of channels in cooperation with said controller of said first station;
   wherein said controller of said first station supplies a control signal comprising said at least two vacant channels to said second station, when a communication request is generated in either of said first or second station, and said controller of said second station selects a channel from said at least two vacant channels.

2. A radiotelephone set, according to claim 1, wherein:
   said controller of said second station selects a second channel from said at least two vacant channels, when a first channel selected from said at least two vacant channels is determined to be occupied on said second station; and
   said controller of said first station sets said first station to use said second channel after a predetermined time subsequent to a setting of said first channel.

3. A radiotelephone set, according to claim 1, further comprising:
   a third station which is of the same structure and operation as said second station;
   wherein said controller of said first station supplies said control signal to said second and third stations, said control signal comprising a signal for identifying one of said second and third stations.

4. A radiotelephone set, according to claim 1, wherein:
   said first station further comprising a telephone network circuit connected to a telephone line, said memory and said controller.

## FIG.I PRIOR ART

# FIG.2  PRIOR ART

# FIG.3 PRIOR ART

16a COMMUNICATION AREA

16b COMMUNICATION AREA

20a FIRST CORDLESS TELEPHONE SET

14a MOBILE STATION

12b BASE STATION

20b SECOND CORDLESS TELEPHONE SET

12a BASE STATION

14b MOBILE STATION

EP 0 505 204 A2

FIG. 4

38 TELEPHONE LINE

30 CORDLESS TELEPHONE SET

32 BASE STATION

34 MOBILE STATION

51

36 NETWORK CIRCUIT

42 TRANSMITTER

RECEIVER

40

41

50 RECEIVER

54 SPEAKER

TRANSMITTER

56 MICROPHON

52

58 SOUNDER

46a MEMORY 46b MEMORY 46c MEMORY

CONTROLLER

44

CONTROLLER

60

EP 0 505 204 A2

EP 0 505 204 A2

# FIG. 5

| PREAMBLE | SYNC SIGNAL | ID NUMBER | COMMAND | DATA 1 | DATA 2 |
|----------|-------------|-----------|---------|--------|--------|
| 70 | 71 | 72 | 73 | 74 | 75 |

## FIG. 6

32
BASE STATION

34
MOBILE STATION

CALL REQUEST SIGNAL

CALL REQUEST BUTTON ON

CHANNEL DESIGNATION SIGNAL

$S_1$   $S_2$   $S_3$

CHANNEL SETTING

ANSWER CONFIRMING

CHANNEL SETTING AND VACANT JUDGMENT

CHANNEL SETTING

READY SIGNAL

AF ON SIGNAL

COMMUNICATING

COMMUNICATING